# FASCICULE DE BREVET EUROPEEN

(11) **EP 2 920 942 B1**
(45) Date de publication et mention de la délivrance du brevet: **19.10.2016**
(21) Numéro de dépôt: 13803131.5
(22) Date de dépôt: 13.11.2013
(51) Int. Cl.: H04W 12/06, H04L 29/06

(54) **SELECTION DE PERIODES DE RAFRAICHISSEMENT DANS UN RESEAU IP**
AUSWAHL VON AKTUALISIERUNGSPERIODEN IN EINEM IP-NETZWERK
SELECTION OF REFRESHER PERIODS IN AN IP NETWORK

(30) Priorité: 13.11.2012 FR 1260795
(43) Date de publication de la demande: 23.09.2015
(73) Titulaire: Orange, 75015 Paris (FR)
(72) Inventeur: LE ROUZIC, Jean-Claude, F-22560 Trebeurden (FR); LOAEC, Guy, F-29260 Ploudaniel (FR)
(86) Numéro de dépôt international: PCT/FR2013/052718
(87) Numéro de publication internationale: WO 2014/076410

(56) Documents cités:
- WO-A1-2006/072817
- MAHY CISCO SYSTEMS R ET AL: "A Message Summary and Message Waiting Indication Event Package for the Session Initiation Protocol (SIP); rfc3842.txt", 20040801, 1 août 2004 (2004-08-01), XP015009620, ISSN: 0000-0003

## Description

La présente invention concerne les réseaux de communications de type IP (« *Internet Protocol* »), et notamment ceux parmi les réseaux IP qui sont aptes à mettre en oeuvre des protocoles de contrôle de session évolués. Les réseaux IP permettent la diffusion de données conversationnelles, dans le cadre de services tels que « Voix sur IP » (VoIP), « Partage de Contenu », ou « Messagerie Instantanée ».

Plus particulièrement, la présente invention concerne les moyens mis en place dans un réseau IP pour fixer la période de rafraîchissement d'un dispositif-client (que l'on appellera aussi simplement « terminal ») auprès du coeur de réseau.

On dira qu'un dispositif-client (« *User Equipment* » en anglais) « appartient » au réseau d'un opérateur donné lorsque l'utilisateur de ce dispositif-client possède un compte auprès de cet opérateur, et ce, quel que soit le réseau d'accès utilisé par le dispositif-client pour se connecter au réseau de l'opérateur. Ces dispositifs-clients peuvent par exemple être un terminal fixe ou mobile, ou une passerelle domestique (« *Residential Gateway* » en anglais) ou située dans une entreprise, ou encore une passerelle d'opérateur réseau (« *Voice Gateway* » en anglais) telle qu'un DSLAM-SIP (DSLAM sont les initiales des mots anglais « *Digital Subscriber Line Access Multiplexer* » signifiant « Multiplexeur d'Accès de Lignes d'Abonnés Numériques » ; il s'agit d'un dispositif collectant le trafic de données DSL qui transite sur un certain nombre de lignes téléphoniques).

Les protocoles de contrôle de session évolués classiques, tels que le protocole SIP (initiales des mots anglais « *Session Initiation Protocol* » signifiant « Protocole d'Initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265. Cette extension permet des procédures de notification d'événements.

Le protocole SIP est utilisé en particulier dans les infrastructures de type IMS (initiales des mots anglais « *IP Multimedia Subsystem* » signifiant « Sous-système Multimédia sur IP »). L'IMS a été défini par l'organisme de normalisation 3GPP (« *3^{rd} Generation Partnership Project* ») et TISPAN (« *Telecommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en oeuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Lorsqu'un utilisateur souhaite bénéficier des services offerts par un réseau IMS, il émet vers le réseau des messages de signalisation pouvant inclure notamment divers types de requêtes.

Tout d'abord, le dispositif-client de l'utilisateur doit, sauf exceptions (telles que certains appels d'urgence), s'enregistrer sur le réseau. Lorsque le réseau est incapable de faire le lien entre cet enregistrement et un enregistrement précédent (par exemple suite à une panne réseau, ou suite à un arrêt du terminal pendant une durée supérieure à une valeur prédéterminée), l'enregistrement est considéré comme étant un enregistrement initial. Après un enregistrement initial, le dispositif-client de l'utilisateur doit envoyer périodiquement au réseau une requête pour confirmer qu'il souhaite maintenir son enregistrement ; en effet, cet enregistrement n'est maintenu que pendant une durée prédéterminée, que nous appellerons « période de rafraîchissement d'enregistrement » (souvent désignée par « Expires » dans la littérature technique) ; à titre exemple, le document RFC 3261 mentionné ci-dessus préconise une période de rafraîchissement d'enregistrement égale à 3600 secondes. En pratique, c'est le réseau qui indique à chaque dispositif-client qui s'enregistre la valeur de la période de rafraîchissement d'enregistrement que ce dispositif-client devra respecter pour pouvoir bénéficier sans interruption des services offerts par ce réseau.

Pour pouvoir donc enregistrer les dispositifs-clients, les réseaux IMS comprennent un ou plusieurs serveurs d'enregistrement, appelés « S-CSCF » (initiales des mots anglais « *Serving-Call Server Control Function* » signifiant « Fonction de Commande de Session d'Appel Serveuse »), aptes (entre autres fonctions) à gérer la procédure d'enregistrement des dispositifs connectés au réseau.

En outre, ces réseaux comprennent un ou plusieurs serveurs, appelés « I-CSCF » (initiales des mots anglais « *Interrogating-Call Server Control Function* » signifiant « Fonction de Commande de Session d'Appel Interrogatrice ») - d'ailleurs souvent combinés physiquement avec les serveurs de type S-CSCF pour constituer des serveurs dénotés « I/S-CSCF » - qui, au moment de l'enregistrement d'un dispositif-client, interrogent un serveur appelé « HSS » (initiales des mots anglais « *Home Subscriber Server* » signifiant « Serveur d'Abonné de Rattachement »), afin de pouvoir sélectionner un serveur S-CSCF possédant les caractéristiques qui sont obligatoirement (et, le cas échéant, optionnellement) requises pour atteindre le niveau de service souscrit par l'utilisateur. Les serveurs HSS contiennent chacun une base de données-clients, et sont donc l'équivalent dans les réseaux IP des serveurs « HLR » (initiales des mots anglais « *Home Location Register* » signifiant « Registre de Localisation de Rattachement ») utilisés dans les réseaux GSM. Chaque serveur HSS contient le « profil » d'un certain nombre de dispositifs-clients du réseau, ce profil comprenant leur état d'enregistrement, des données d'authentification et de localisation, et les services souscrits.

En effet, chaque utilisateur peut, après qu'un serveur S-CSCF lui ait été ainsi attribué, envoyer une requête de souscription à certains services valable pour la connexion en cours. Le principe général est qu'un dispositif-client peut souscrire à un service technique particulier à l'aide d'une requête appropriée (SIP SUBSCRIBE). Ainsi, dans le cas d'une souscription à l'état d'une ressource, des notifications d'événement (SIP NOTI FY) sont envoyées au dispositif-client dès lors que l'état de la ressource change ; par exemple, lorsque l'utilisateur d'un terminal dispose d'une boîte vocale sur le réseau, ce terminal peut souscrire à une notification de dépôt de message, c'est-à-dire qu'il peut demander à être informé chaque fois qu'un message a été enregistré sur cette boîte vocale ; le terminal de l'utilisateur peut, de même, demander à être notifié de son propre état d'enregistrement, et ainsi de suite.

Les requêtes de souscription initiales sont émises soit de manière automatique juste après le démarrage du terminal ou d'une application installée sur ce terminal, soit suite à une action de l'utilisateur sur l'interface du terminal. Pour chaque souscription, le dispositif-client doit émettre d'abord une requête initiale, et puis périodiquement une requête pour renouveler sa souscription (on parle de « rafraîchissement » de la souscription).

Pour chaque souscription (qu'il s'agisse d'une souscription initiale ou d'un rafraîchissement), le réseau indique au dispositif-client la période de rafraîchissement souhaitée par l'opérateur du réseau pour cette souscription. Dans le cas du document RFC 3265, la période de rafraîchissement maximale associée à la souscription à un service technique (« *event-package* » en anglais) particulier offert par le réseau est définie par renvoi au document qui définit ce service technique particulier ; par exemple, concernant la souscription à la notification de dépôt de message, le document RFC 3842 préconise (cf. « *event-package message summary* ») une période de rafraîchissement allant de quelques heures à quelques jours.

La période de rafraîchissement de souscription peut être différente pour chaque type de service souscrit, et elle est également *a priori* indépendante de la période de rafraîchissement d'enregistrement.

Dans ce contexte, pendant le fonctionnement normal d'un réseau SIP, ce dernier reçoit des requêtes d'enregistrement initial et de souscription initiale, ainsi que des requêtes de rafraîchissement d'enregistrement et de souscription, au fur et à mesure que les usagers du réseau se connectent, initialisent puis renouvellent leur enregistrement et leurs souscriptions au bout des périodes de rafraîchissement respectives prévues. Chaque opérateur de réseau IP doit évidemment prévoir la capacité de traitement des noeuds de son réseau, afin de pouvoir faire face à la fréquence de requêtes correspondante, notamment en fonction du nombre habituel d'usagers du réseau.

Le choix de la valeur de la période de rafraîchissement est stratégique, car cette valeur conditionne le dimensionnement de l'ensemble des équipements du coeur de réseau : si la période de rafraîchissement est trop petite, le surcoût en dimensionnement est élevé ; si elle est trop grande, les informations relatives à la présence de tel ou tel dispositif-client dans le réseau sont peu sûres.

Certains constructeurs proposent la possibilité d'ajuster la période de rafraîchissement en fonction de la technologie du type d'accès (ADSL, xDSL, WiFi, WiMAX, GSM, LTE, et ainsi de suite) utilisé par le dispositif-client. Cependant, pour un même type d'accès, on peut se demander s'il n'est pas possible, toujours dans le souci d'abaisser autant que possible les coûts relatifs au trafic d'enregistrement et/ou de souscription, d'affiner encore plus la valeur d'une ou plusieurs période(s) de rafraîchissement en fonction d'autres critères pratiques.

La présente invention concerne donc un serveur d'enregistrement dans un réseau IP, possédant des moyens pour, suite à la réception d'une requête pour un enregistrement initial ou de rafraîchissement sur ledit réseau IP ou pour une souscription initiale ou de rafraîchissement à un service donné disponible sur ce réseau IP, sélectionner pour le dispositif-client émetteur de la requête une valeur pour la période de rafraîchissement correspondante. Ledit serveur d'enregistrement est remarquable en ce qu'il possède en outre des moyens pour sélectionner ladite valeur en fonction, au moins, du type d'authentification utilisé par ledit dispositif-client pour s'authentifier auprès du réseau IP.

Ainsi, la présente invention propose de prendre en compte le type d'authentification comme moyen de discrimination pour la sélection d'une période de rafraîchissement d'enregistrement ou de souscription. Ledit serveur d'enregistrement pourra par exemple, dans le cadre d'un réseau IMS, comprendre un serveur S-CSCF.

Grâce à ces dispositions, un opérateur de réseau peut proposer des périodes de rafraîchissement différentes en fonction du niveau de confiance que l'on peut, d'un point de vue technique, accorder au type d'authentification appliqué à l'utilisateur du dispositif-client. En effet, certains types d'authentification sont considérés comme très robustes à cet égard, de sorte que la fraude relative à une écoute illicite des communications (par exemple sur un point d'accès WiFi) n'est pas possible ; dans ces conditions, il est clair que l'opérateur du réseau peut augmenter la période de rafraîchissement sans faire courir de risque aux usagers du réseau. En revanche, d'autres méthodes d'authentification ne sont pas à l'abri d'une écoute malveillante ; or une telle écoute permettrait à un « pirate », de se livrer, par exemple, à des attaques par rejeu (« *replay* » en anglais) pour peu que le coeur de réseau ne mette pas en oeuvre toutes les vérifications nécessaires ; dans ce cas, une période d'enregistrement relativement courte permet de se prémunir contre ces attaques, puisqu'en abaissant la période d'enregistrement on est en mesure de proposer à un dispositif-client de nouveaux vecteurs d'authentification de manière fréquente, lors de chaque rafraîchissement d'enregistrement ou de souscription.

Ainsi, la prise en compte de la sécurité intrinsèque à la méthode d'authentification utilisée permet avantageusement à un opérateur de réseau d'obtenir la souplesse nécessaire au meilleur dimensionnement de son réseau coeur, ainsi que de ses réseaux d'accès. En outre, l'invention permet d'économiser les batteries des terminaux mobiles en limitant, autant que possible, la fréquence d'émission des requêtes de rafraîchissement d'enregistrement ou de souscription.

Selon des caractéristiques particulières, ledit serveur d'enregistrement comprend en outre des moyens pour, lors de ladite sélection de la valeur de la période de rafraîchissement d'enregistrement ou de souscription à un service donné, prendre également en compte le type d'accès utilisé par ledit dispositif-client pour accéder audit réseau IP.

Grâce à ces dispositions, la valeur sélectionnée pour la période de rafraîchissement est la plus pertinente possible.

On notera qu'il est possible de réaliser ce serveur d'enregistrement dans le contexte d'instructions logicielles et/ou dans le contexte de circuits électroniques.

L'invention vise donc également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour gérer le fonctionnement d'un serveur d'enregistrement tel que décrit succinctement ci-dessus, lorsqu'il est exécuté sur un ordinateur.

Les avantages offerts par ce programme d'ordinateur sont essentiellement les mêmes que ceux offerts par ledit serveur d'enregistrement.

Selon un autre aspect, l'invention concerne une base de données possédant des moyens pour fournir à un serveur d'enregistrement d'un réseau IP, en réponse à une requête dudit serveur d'enregistrement, au moins une valeur pour la période de rafraîchissement pour l'enregistrement d'un dispositif-client audit réseau IP et/ou pour une souscription par un dispositif-client à un service donné offert par ledit réseau IP. Ladite base de données est remarquable en ce que, lorsque ladite requête indique un type d'authentification utilisé par ledit dispositif-client pour s'authentifier auprès dudit réseau IP, ladite valeur fournie par la base de données dépend au moins dudit type d'authentification indiqué dans la requête.

On notera que cette base de données pourra être physiquement intégrée à un serveur d'enregistrement, ou être logée dans un module séparé (consultable, de préférence, par les serveurs d'enregistrement du réseau IP).

Grâce à ces dispositions, l'opérateur du réseau IP dispose d'un endroit dédié pour enregistrer les informations dont ont besoin les serveurs d'enregistrement du réseau IP pour mettre en oeuvre les moyens décrits succinctement ci-dessus. Cette base de données pourra être commodément configurée et mise à jour par l'opérateur du réseau IP en fonction de sa politique de sécurité et de ses possibilités en termes de dimensionnement du réseau.

Selon des caractéristiques particulières, ladite valeur fournie par la base de données dépend également d'un type d'accès utilisé par ledit dispositif-client pour accéder audit réseau IP, ledit type d'accès ayant également été indiqué dans ladite requête.

En outre, la base de données pourra avantageusement fournir, pour l'enregistrement et/ou pour une souscription à un service donné, différentes valeurs de la période de rafraîchissement associées à différentes modalités, telles qu'une valeur minimum et/ou une valeur par défaut et/ou une valeur maximum.

Selon encore un autre aspect, la présente invention concerne un procédé de sélection d'une période de rafraîchissement dans un réseau IP, comprenant les étapes suivantes :
- un dispositif-client émet une requête pour un enregistrement initial ou de rafraîchissement sur ledit réseau IP ou pour une souscription initiale ou de rafraîchissement à un service donné disponible sur ce réseau IP, et
- ledit dispositif-client reçoit, en réponse à sa requête, une valeur pour la période de rafraîchissement correspondante.
Ledit procédé est remarquable en ce que ladite valeur est fonction, au moins, du type d'authentification utilisé par ledit dispositif-client pour s'authentifier auprès du réseau IP.

Selon des caractéristiques particulières, ladite valeur est également fonction du type d'accès utilisé par ledit dispositif-client pour accéder audit réseau IP.

Les avantages offerts par ce procédé de sélection d'une période de rafraîchissement sont essentiellement les mêmes que ceux offerts par ledit serveur d'enregistrement.

D'autres aspects et avantages de l'invention apparaîtront à la lecture de la description détaillée ci-dessous de modes de réalisation particuliers, donnés à titre d'exemples non limitatifs. La description se réfère à la figure qui l'accompagne, laquelle représente schématiquement un système pour la fourniture de services multimédia apte à mettre en oeuvre l'invention.

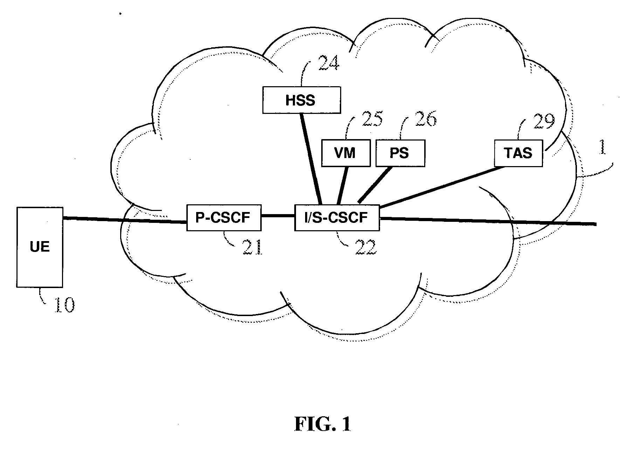

Bien que la présente invention concerne les réseaux IP en général, on va considérer à présent, à titre d'exemple de réalisation, une architecture de réseau de type IMS, telle que présentée succinctement ci-dessus. Cette architecture est illustrée sur la **figure 1**.

Les services multimédia offerts par ce réseau IMS 1 peuvent comprendre des services de téléphonie, de vidéo-téléphonie, de partage de contenu (« *content-sharing* » en anglais), de Présence, de Messagerie Instantanée, ou de télévision. Ces services sont à la disposition de l'utilisateur d'un dispositif-client (« *User Equipment* », ou UE en anglais) 10 appartenant au réseau 1, qui permet au dispositif-client 10 d'échanger des flux multimédias et des signaux de contrôle de session conformes au protocole SIP, par exemple avec le dispositif-client (non représenté) d'un utilisateur appartenant à un réseau SIP (non représenté) relié au réseau 1.

Le dispositif-client 10 peut être un terminal fixe ou mobile, ou une passerelle domestique ou d'entreprise, disposant de moyens de signalisation SIP et pouvant comprendre des moyens de restitution d'un contenu audiovisuel.

Comme le montre la figure 1, ce réseau IMS 1 comprend, outre une infrastructure de transport IP (non représentée) :
- un ou plusieurs serveurs d'appel I/S-CSCF ; un serveur d'appel I/S-CSCF 22 gère notamment la procédure d'enregistrement des dispositifs connectés au réseau 1 ; le serveur I/S-CSCF 22 gère également le routage de la signalisation entre le dispositif-client 10 et les serveurs de messagerie vocale VM 25, de Présence PS 26, et de téléphonie TAS 29, ainsi que le routage en direction d'autres terminaux gérés par le même réseau IMS et le routage de la signalisation entre ce réseau IMS 1 et d'autres réseaux (non représentés) ;
- un (ou plusieurs) serveur(s) P-CSCF (initiales des mots anglais *« Proxy-Call Server Control Function* » signifiant « Fonction de Commande de Session d'Appel Mandataire ») ; le serveur P-CSCF 21 sert d'entité de raccordement entre le coeur de réseau IMS et le réseau d'accès utilisé par le dispositif-client 10 ; ainsi, toute la signalisation SIP échangée entre le dispositif-client 10 et le serveur d'appel I/S-CSCF 22 passe par ce serveur P-CSCF 21 ;
- un ou plusieurs serveurs de base de données, de type HSS ; un serveur HSS 24 contient le profil de l'utilisateur du dispositif-client 10 en termes de données d'authentification, de localisation et de services souscrits ;
- un (ou plusieurs) serveur(s) VM 25 de messagerie vocale (« *message-summary* » en anglais); un serveur VM 25 gère la souscription du dispositif-client 10 aux événements de dépôt/consultation des messages à l'intention du dispositif-client 10, et notifie le dispositif-client 10 lors de l'occurrence de ces événements ;
- un (ou plusieurs) serveur(s) de Présence PS 26 ; un serveur PS 26 reçoit, stocke et distribue les informations concernant la Présence de l'utilisateur du dispositif-client 10 sur le réseau ; et
- un (ou plusieurs) serveur(s) de téléphonie TAS 29 ; un serveur TAS gère les services téléphoniques auxquels l'utilisateur du terminal 10 a souscrits auprès de son opérateur, tels que la présentation du numéro ou le renvoi d'appel.

Les serveurs de messagerie vocale VM 25, de Présence PS 26, et de téléphonie TAS 29 sont des exemples de ce que l'on appelle des AS (initiales des mots anglais « *Application Servers* » signifiant « Serveurs d'Applications »).

Certains services, comme ceux du serveur VM 25 et du serveur PS 26, s'appuient sur la souscription du terminal 10 à des événements prédéterminés.

Dans nombre de réseaux IP et notamment dans les réseaux IMS, tout enregistrement (initial ou de rafraîchissement) d'un terminal requiert une authentification de ce terminal. Différents types d'authentification sont couramment utilisés.

Par exemple, le 3GPP définit (dans la spécification TS 33.203) les types d'authentification suivants : le « AKA » (*Authentification and Key Agreement*), le « SIP Digest » avec, ou sans tunnel de sécurité « TLS » (initiales de « *Transport Layer Security* »), le « NASS-IMS bundled » (NASS sont les initiales de « *Network Attachment Sub-System* »), le « GIBA » (initiales de « GPRS-IMS-Bundled Authentication »), et le « TNA » (initiales de « *Trusted Node Authentication* »).

Certains de ces types d'authentification sont considérés comme très robustes, dans la mesure où ils associent à l'authentification la création d'un tunnel de sécurité entre le P-CSCF et le dispositif-client. C'est le cas par exemple de l'IMS AKA (tunnel « IPsec » entre le P-CSCF et le dispositif-client) et du SIP Digest sur TLS (tunnel TLS entre le P-CSCF et le dispositif-client). D'autres méthodes d'authentification, en revanche, comme GIBA par exemple, ne sont pas aussi robustes.

L'invention propose donc de choisir la valeur de la période de rafraîchissement pour l'enregistrement et/ou pour une souscription à un service donné en fonction (au moins) du type d'authentification, de manière à pouvoir prendre en compte le niveau de sécurité propre à chaque procédure d'authentification.

Un cas particulier illustrant l'intérêt pratique de la présente invention est celui des réseaux d'accès mobiles à un coeur de réseau IMS. On rappelle à cet égard que le réseau coeur des architectures GSM et UMTS classiques héberge des commutateurs de circuits appelés MSC (initiales des mots anglais « *Mobile Switching Center* » signifiant « Centre de Commutation Mobile »). Ces MSC assurent la gestion du lien de communication avec le réseau d'accès. Ils stockent le profil de l'abonné issu du HLR après l'enregistrement du dispositif-client de l'abonné auprès du réseau, et effectuent un contrôle des ressources réseau demandées par l'abonné.

Or, dans sa stratégie de convergence vers un coeur unique pour tous les types d'accès, le 3GPP prévoit de faire migrer vers l'IMS la logique de service des terminaux mobiles desservis par des MSC. Dans une telle configuration, l'offre de services des terminaux mobiles est hébergée dans l'IMS, mais les terminaux mobiles continuent de s'attacher au réseau mobile, et c'est un serveur MSC dit « ICS » (initiales de « *IMS Centralized Services* ») qui enregistre les mobiles dont il a la charge dans l'IMS ; il s'agit donc là en quelque sorte d'une délégation d'enregistrement des terminaux mobiles à une entité tiers constituée par ledit MSC ICS. Pour mettre en oeuvre cet enregistrement, le MSC ICS utilise le mode d'authentification TNA, mentionné ci-dessus. On notera que ce mode d'authentification est un peu particulier dans la mesure où il met en oeuvre un dialogue entre deux équipements de coeur de réseau ; dans ces conditions, l'opérateur du réseau IMS peut naturellement, en toute sécurité, sélectionner une période de rafraîchissement élevée.

On va décrire à présent les étapes d'un enregistrement initial d'un terminal 10 auprès d'un réseau IMS 1, selon un premier mode de réalisation de l'invention.

Lors d'une étape E1, un terminal 10 émet, à partir d'un certain réseau d'accès, une requête d'enregistrement à un serveur P-CSCF 21. Cette requête d'enregistrement comprend un « *header* d'autorisation » fournissant des informations permettant au réseau 1 de déterminer le type d'authentification adéquat. La structure de ce *header* d'autorisation est par exemple conforme aux recommandations de la RFC 2617 de l'IETF (cf. notamment les Sections 3.2.2 et 3.5), de la spécification TS 24.229 du 3GPP (cf. notamment les Sections 5.1.1, 5.2.2 et 7.2A.2 dans la version 11.5.0), ou de la spécification TS 33.203 du 3GPP (cf. notamment les Annexes P.1, P.2 et P.3 dans la version 12.1.0).

Lors d'une étape E2, le serveur P-CSCF 21 relaie la requête d'enregistrement vers un serveur I-CSCF, en y ajoutant, le cas échéant (cf. par exemple la RFC 3455 de l'IETF, ou la Section 7.2A.4 de la spécification TS 24.229 précitée), une information (par exemple, dans un *header* « P-Access-Network-Info ») concernant le type d'accès utilisé par le terminal 10. Le serveur I-CSCF relaie ensuite tous ces éléments vers un serveur d'enregistrement S-CSCF.

Lors d'une étape E3, le serveur d'enregistrement S-CSCF détermine le type d'algorithme d'authentification adéquat sur la base desdits éléments reçus et, au besoin, d'éléments fournis (dans une réponse « MAA ») par un serveur HSS 24 (en réponse à une requête « MAR » envoyée par le serveur d'enregistrement S-CSCF pour demander au HSS 24 les informations d'authentification, telles que l'identifiant et le mot de passe, relatives à cet usager) ; en effet, le serveur d'enregistrement S-CSCF peut ainsi consulter le HSS 24 sur le choix final de l'algorithme lorsque plusieurs algorithmes sont autorisés par l'opérateur pour un type d'accès donné. On pourra par exemple appliquer ici les recommandations des spécifications TS 24.229 (cf. Section 5.4.1) et TS 33.203 (cf. Annexe P.4) précitées.

Lors d'une étape E4, le serveur d'enregistrement S-CSCF émet une requête de consultation à l'intention d'une base de données, ladite requête indiquant le type d'authentification utilisé par le terminal 10 pour s'authentifier auprès du réseau 1, et, optionnellement, le type d'accès utilisé par le terminal 10 pour accéder au réseau 1.

Ladite base de données comprend une table matricielle configurée par l'opérateur du réseau et indexée par :
- le type d'authentification, et, optionnellement,
- d'autres informations telles que le type d'accès (par exemple, ADSL, xDSL, WiFi, WiMAX, GSM ou LTE) utilisé par ledit terminal.

Le S-CSCF obtient comme résultat de cette consultation les valeurs adéquates, prédéterminées par l'opérateur, de la période de rafraîchissement d'enregistrement, et ce, de préférence, pour différentes modalités, à savoir une valeur minimum, une valeur par défaut et une valeur maximum.

Lors d'une étape E5, le serveur d'enregistrement S-CSCF transmet au serveur P-CSCF 21, dans une réponse à la requête d'enregistrement reçue à l'étape E2, une desdites valeurs de la période de rafraîchissement d'enregistrement ainsi sélectionnées, en utilisant le paramètre « Expires » du header « Contact ». Plus exactement, la valeur transmise au serveur P-CSCF 21 est :
- la valeur par défaut si le terminal 10 n'a pas demandé de valeur pour la période de rafraîchissement d'enregistrement,
- ladite valeur maximum si le terminal 10 a demandé, dans la requête d'enregistrement émise à l'étape E1, une valeur supérieure à cette valeur maximum,
- la valeur demandée par le terminal 10 si elle est comprise entre ladite valeur minimum et ladite valeur maximum, ou
- ladite valeur minimum si la valeur demandée par le terminal 10 est inférieure à cette valeur minimum.
Optionnellement, le serveur d'enregistrement S-CSCF peut également transmettre cette valeur à des serveurs d'application AS.

Enfin, lors d'une étape E6, le serveur P-CSCF 21 transmet cette valeur de la période de rafraîchissement d'enregistrement au terminal 10 dans un message de réponse à la requête d'enregistrement.

Selon un deuxième mode de réalisation, applicable dans le cadre, mentionné ci-dessus, de l'accès *via* un réseau mobile à un coeur de réseau IMS, on met en oeuvre des étapes analogues aux étapes du premier mode de réalisation décrit ci-dessus, si ce n'est que le serveur P-CSCF 21 y est remplacé par un serveur MSC ICS.

De manière générale, la présente invention peut être mise en oeuvre au sein des noeuds, par exemple des serveurs d'enregistrement, d'un réseau IP, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour gérer le fonctionnement d'un serveur d'enregistrement selon l'invention.

En effet, l'invention vise aussi un programme d'ordinateur téléchargeable depuis un réseau de communication comprenant des instructions pour gérer le fonctionnement d'un serveur d'enregistrement selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour gérer le fonctionnement d'un serveur d'enregistrement selon l'invention.

## Revendications

1. Serveur d'enregistrement dans un réseau IP, possédant des moyens pour, suite à la réception d'une requête pour un enregistrement initial ou de rafraîchissement sur ledit réseau IP (1) ou pour une souscription initiale ou de rafraîchissement à un service donné disponible sur ce réseau IP (1), sélectionner pour le dispositif-client (10) émetteur de la requête une valeur pour la période de rafraîchissement correspondante, **caractérisé en ce qu'**il possède en outre des moyens pour sélectionner ladite valeur en fonction, au moins, du type d'authentification utilisé par ledit dispositif-client (10) pour s'authentifier auprès du réseau IP (1).

2. Serveur d'enregistrement selon la revendication 1, **caractérisé en ce qu'**il comprend en outre des moyens pour, lors de ladite sélection de la valeur de la période de rafraîchissement d'enregistrement ou de souscription à un service donné, prendre également en compte le type d'accès utilisé par ledit dispositif-client (10) pour accéder audit réseau IP (1).

3. Serveur d'enregistrement selon la revendication 1 ou la revendication 2, **caractérisé en ce que**, ledit réseau IP (1) étant un réseau de type IMS, ledit serveur d'enregistrement comprend un serveur S-CSCF.

4. Base de données possédant des moyens pour fournir à un serveur d'enregistrement d'un réseau IP (1), en réponse à une requête dudit serveur d'enregistrement, au moins une valeur pour la période de rafraîchissement pour l'enregistrement d'un dispositif-client (10) audit réseau IP (1) et/ou pour une souscription par un dispositif-client (10) à un service donné offert par ledit réseau IP (1), ladite base de données étant **caractérisée en ce que**, lorsque ladite requête indique un type d'authentification utilisé par ledit dispositif-client (10) pour s'authentifier auprès dudit réseau IP (1), ladite valeur fournie par la base de données dépend au moins dudit type d'authentification indiqué dans la requête.

5. Base de données selon la revendication 4, **caractérisée en ce que** ladite valeur dépend également d'un type d'accès utilisé par ledit dispositif-client (10) pour accéder audit réseau IP (1), ledit type d'accès ayant également été indiqué dans ladite requête.

6. Procédé de sélection d'une période de rafraîchissement dans un réseau IP, comprenant les étapes suivantes :
- un dispositif-client (10) émet (E1) une requête pour un enregistrement initial ou de rafraîchissement sur ledit réseau IP (1) ou pour une souscription initiale ou de rafraîchissement à un service donné disponible sur ce réseau IP (1), et
- ledit dispositif-client (10) reçoit (E6), en réponse à sa requête, une valeur pour la période de rafraîchissement correspondante,
**caractérisé en ce que** ladite valeur est fonction, au moins, du type d'authentification utilisé par ledit dispositif-client (10) pour s'authentifier auprès du réseau IP (1).

7. Procédé de sélection selon la revendication 6, **caractérisé en ce que** ladite valeur est également fonction du type d'accès utilisé par ledit dispositif-client (10) pour accéder audit réseau IP (1).

8. Moyen de stockage de données inamovible, ou partiellement ou totalement amovible, comportant des instructions de code de programme informatique pour gérer le fonctionnement d'un serveur d'enregistrement selon l'une quelconque des revendications 1 à 3.

9. Programme d'ordinateur téléchargeable depuis un réseau de communications et/ou stocké sur un support lisible par ordinateur et/ou exécutable par un microprocesseur, **caractérisé en ce qu'**il comprend des instructions pour gérer le fonctionnement d'un serveur d'enregistrement selon l'une quelconque des revendications 1 à 3, lorsqu'il est exécuté sur un ordinateur.

## Patentansprüche

1. Registrierungsserver in einem IP-Netzwerk, der Mittel aufweist, um nach dem Empfangen einer Anfrage für eine Erstregistrierung oder Aktualisierungsregistrierung in dem IP-Netzwerk (1) oder für eine Erstabonnierung oder eine Aktualisierungsabonnierung eines bestimmten Services, der in diesem IP-Netzwerk (1) verfügbar ist, für die anfragende Clientvorrichtung (10) einen Wert für die entsprechende Aktualisierungsperiode auszuwählen, **dadurch gekennzeichnet, dass** er ferner Mittel aufweist, um den Wert mindestens in Abhängigkeit von der Art der Authentifizierung, die von der Clientvorrichtung (10) verwendet wird, um bei dem IP-Netzwerk (1) authentifiziert zu werden, auszuwählen.

2. Registrierungsserver nach Anspruch 1, **dadurch gekennzeichnet, dass** er ferner Mittel aufweist, um bei dem Auswählen des Wertes der Aktualisierungs- oder der Abonnierungsperiode eines bestimmten Services ebenfalls die Art des Zugangs zu berücksichtigen, die von der Clientvorrichtung (10) verwendet wird, um auf das IP-Netzwerk (1) zuzugreifen.

3. Registrierungsserver nach Anspruch 1 oder Anspruch 2, **dadurch gekennzeichnet, dass** das IP-Netzwerk (1) ein Netzwerk vom Typ des IMS ist, wobei der Registrierungsserver einen S-CSCF-Server aufweist.

4. Datenbank, die Mittel aufweist, um einem Registrierungsserver eines IP-Netzwerks (1) als Antwort auf eine Anfrage des Registrierungsservers mindestens einen Wert für die Aktualisierungsperiode für das Registrieren einer Clientvorrichtung (10) in dem IP-Netzwerk (1) und/oder für ein Abonnieren durch eine Clientvorrichtung (10) eines bestimmten Services, der von dem IP-Netzwerk (1) angeboten wird, bereitzustellen, wobei die Datenbank **dadurch gekennzeichnet ist, dass**, wenn die Anfrage eine Art der Authentifizierung angibt, die von der Clientvorrichtung (10) verwendet wird, um bei dem IP-Netzwerk (1) authentifiziert zu werden, der Wert, der von der Datenbank bereitgestellt wird, mindestens von der Art der Authentifizierung abhängt, die in der Anfrage angegeben ist.

5. Datenbank nach Anspruch 4, **dadurch gekennzeichnet, dass** der Wert ebenfalls von einem Typ des Zugangs abhängt, der von der Clientvorrichtung (10) verwendet wird, um auf das IP-Netzwerk (1) zuzugreifen, wobei der Typ des Zugangs ebenfalls in der Anfrage angegeben worden ist.

6. Verfahren zum Auswählen einer Aktualisierungsperiode in dem IP-Netzwerk, das die folgenden Schritte aufweist:
- eine Clientvorrichtung (10) sendet (E1) eine Anfrage für eine Erstregistrierung oder Aktualisierungsregistrierung in dem IP-Netzwerk (1) oder für eine Erstabonnierung oder eine Aktualisierungsabonnierung eines bestimmten Services, der in diesem IP-Netzwerk (1) verfügbar ist, und
- die Clientvorrichtung (10) empfängt (E6) als Antwort auf ihre Anfrage einen Wert für die entsprechende Aktualisierungsperiode,
**dadurch gekennzeichnet, dass** der Wert mindestens von der Art der Authentifizierung, die von der Clientvorrichtung (10) verwendet wird, um bei dem IP-Netzwerk (1) authentifiziert zu werden, abhängt.

7. Verfahren zum Auswählen nach Anspruch 6, **dadurch gekennzeichnet, dass** der Wert ebenfalls von einem Typ des Zugangs abhängt, der von der Clientvorrichtung (10) verwendet wird, um auf das IP-Netzwerk (1) zuzugreifen.

8. Nicht abnehmbares oder teilweise oder vollständig abnehmbares Datenspeichermittel, das Computerprogrammcodebefehle aufweist, um den Betrieb eines Registrierungsservers nach einem der Ansprüche 1 bis 3 zu verwalten.

9. Computerprogramm, das von einem Kommunikationsnetzwerk heruntergeladen werden kann und/oder auf einem computerlesbaren Datenträger gespeichert ist und/oder von einem Mikroprozessor ausgeführt werden kann, **dadurch gekennzeichnet, dass** es Anweisungen aufweist, um den Betrieb eines Registrierungsservers nach einem der Ansprüche 1 bis 3 zu verwalten, wenn es auf einem Computer ausgeführt wird.

## Claims

1. Registration server in an IP network, possessing means for, after receiving a request for an initial or refresh registration on said IP network (1) or for an initial or refresh subscription to a given service available on this IP network (1), selecting for the client-device (10) emitting the request a value for the corresponding refresh period, **characterized in that** it furthermore possesses means for selecting said value as a function, at least, of the type of authentication used by said client-device (10) to authenticate itself with the IP network (1).

2. Registration server according to Claim 1, **characterized in that** it furthermore comprises means for, during said selection of the value of the period of refresh of registration or of subscription to a given service, also taking into account the type of access used by said client-device (10) to access said IP network (1).

3. Registration server according to Claim 1 or Claim 2, **characterized in that**, said IP network (1) being a network of IMS type, said registration server comprises an S-CSCF server.

4. Database possessing means for providing to a registration server of an IP network (1), in response to a request of said registration server, at least one value for the refresh period for the registration of a client-device (10) to said IP network (1) and/or for a subscription by a client-device (10) to a given service offered by said IP network (1), said database being **characterized in that**, when said request indicates a type of authentication used by said client-device (10) to authenticate itself with said IP network (1), said value provided by the database depends at least on said type of authentication indicated in the request.

5. Database according to Claim 4, **characterized in that** said value also depends on a type of access used by said client-device (10) to access said IP network (1), said type of access also having been indicated in said request.

6. Method for selecting a refresh period in an IP network, comprising the following steps:
- a client-device (10) emits (E1) a request for an initial or refresh registration on said IP network (1) or for an initial or refresh subscription to a given service available on this IP network (1), and
- said client-device (10) receives (E6), in response to its request, a value for the corresponding refresh period,
**characterized in that** said value is dependent, at least, on the type of authentication used by said client-device (10) to authenticate itself with the IP network (1).

7. Selecting method according to Claim 6, **characterized in that** said value is also dependent on the type of access used by said client-device (10) to access said IP network (1).

8. Irremovable, or partially or totally removable means for storing data, comprising computer program code instructions for managing the operation of a registration server according to any one of Claims 1 to 3.

9. Computer program downloadable from a communications network and/or stored on a medium readable by computer and/or executable by a microprocessor, **characterized in that** it comprises instructions for managing the operation of a registration server according to any one of Claims 1 to 3, when it is executed on a computer.
